# EUROPEAN PATENT APPLICATION

(11) **EP 1 391 550 A1**
(43) Date of publication of application: **25.02.2004**
(21) Application number: 03008377.8
(22) Date of filing: 10.04.2003
(51) Int. Cl.: D06F 58/24

(54) **Condensing type clothes dryer and air-cooled condenser thereof**

(30) Priority: 21.08.2002 KR 2002049487
(71) Applicant: LG ELECTRONICS INC., Seoul 150-010 (KR)
(72) Inventor: Park, Young Hwan, Songpa-gu, Seoul (KR); Chung, Choon Myun, Kwangmyong-shi, Kyonggi-do (KR); Choi, Mu Yong,c/o Home Appl.Lab. of LG Elect. Inc., Geumcheon-gu, Seoul (KR); Park, Dae Yun, Kwangmyong-shi, Kyonggi-do (KR); Hong, Kyung Seop, Yonsu-gu, Inchon-kwangyokshi (KR)
(74) Representative: Schorr, Frank, Dr.

(57) **Abstract**

A condenser (30) of a condensing-type clothes dryer is disclosed, which includes a plurality of condensing ducts (30a) provided in a middle portion of a circulation duct, the condensing ducts (30a) condensing air (I) being circulated there-through after being discharged from a drum; and a plurality of cooling fins (30b;30c;30d;30e;30f;30g) provided to be in contact with an outer surface of the condensing ducts (30a), wherein an interval or a pitch of the cooling fins (30b;30c;30d;30e;30f;30g) is different partially according to flow rate of air blown from a cooling fan (50) for a heat-exchange with air flowing through the condensing duct (30a). At this time, the pitch or interval of the cooling fins (30b;30c;30d;30e;30f;30g) is narrow at a portion where air blown from the cooling fan (50) flows fast, and the pitch or internal of the cooling fins (30b;30c;30d;30e;30f;30g) is wide at a portion where air blown from the cooling fan (50) flows slowly.

## Description

This application claims the benefit of the Korean Application No. P2002-49487 filed on August 21, 2002, which is hereby incorporated by reference.

### BACKGROUND OF THE INVENTION

### Field of the Invention

The present invention relates to a clothes dryer, and more particularly, to a condensing type clothes dryer including a condenser having good heat-exchange efficiency.

### Discussion of the Related Art

In general, a clothes dryer is an apparatus for drying clothes by removing moist from wet clothes (laundry) with a blow of a hot air from a heater. The clothes dryer is largely classified into an exhausting-type drying machine and a condensing-type drying machine according to a method for processing humid air generated during drying the wet clothes. In the exhausting-type clothes dryer, the humid air generated during drying the wet clothes in a drum is exhausted to the outside of the drying machine. Meanwhile, in the condensing-type clothes dryer, moist of the humid air is condensed, and removed from the humid air. After that, a dry air removing the moist is flown into the inside of the drum, thereby re-circulating the dry air in the drum.

According to the aforementioned related art, the condensing-type clothes dryer is generally provided with a cylinder-shaped drum, a circulation duct, a circulation fan, a heater, a condenser, a cooling fan, and a filter. At this time, the cylinder-shaped drum receiving the wet clothes (laundry) therein is connected to a driving motor by a belt, for being rotated. The circulation duct forms a circulation passage of an air inside the drum, and the circulation fan circulates the air inside the drum through the circulation duct. Also, the heater heats the circulation air, and the condenser removes moist from the humid circulation air. The cooling fan sends a cool external air to the condenser, and the filter removes particles such as a nap from the circulation air in the drum.

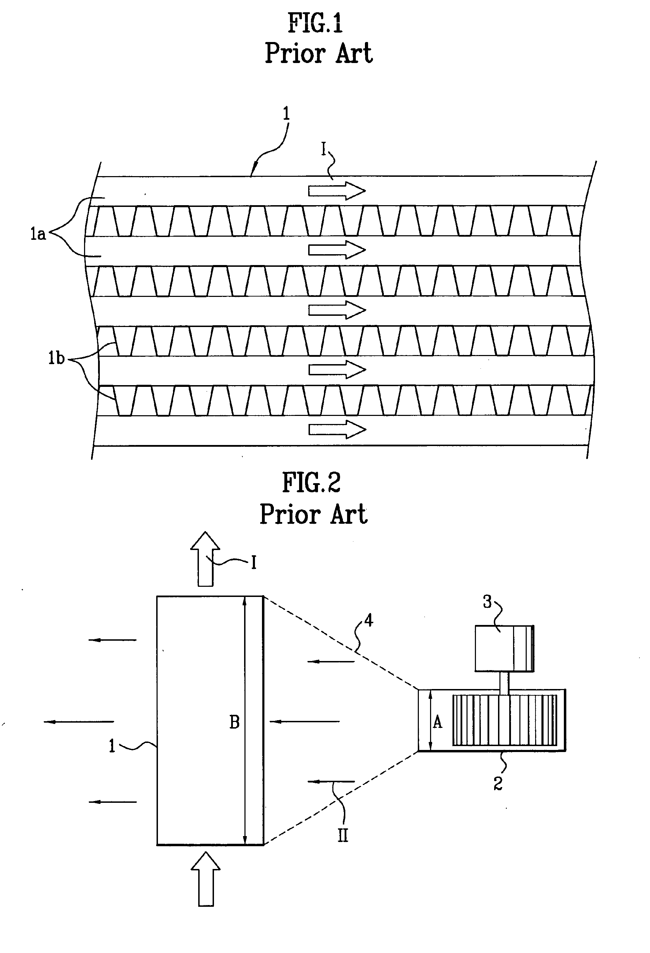

Referring to FIG. 1, the condenser of the related art condensing-type clothes dryer is provided with a plurality of condensing ducts 1a and a plurality of cooling fins 1b. The cooling fins 1b are provided for being in contact with the condensing ducts 1a between the respective condensing ducts 1a.

The condensing duct 1a is connected to the center portion of the circulation duct, so that the air including the moist is circulated in the condensing duct 1a as shown in an arrow I of FIG. 1. Generally, the cooling fins 1b have cross-sectional areas of waveforms, which are respectively provided between the condensing ducts 1a. At this time, pitches of the cooling fins 1b are equally formed.

The heat-exchange of the condenser in the related art condensing-type clothes dryer will be described with reference to FIG. 2.

Referring to FIG. 2, the humid air generated by drying the wet clothes in the drum is flown into the inside of the plurality of condensing duct 1a, and the cool external air blown from the cooling fan 2 at one side of the condenser 1 is flown into a portion having the cooling fins 1b between the condensing ducts 1a at the same time. Thus, the humid air passing through the inside of the condensing duct 1a makes the heat-exchange with the cool external air passing through between an outer surface of the condensing duct 1a and the cooling fins 1b, without being mixed together.

That is, the high temperature and humid air flown from the condenser 1 indirectly makes the heat-exchange with the cool external air blown from the cooling fan 2 through the medium of the outer surface of the condensing duct 1a and the cooling fins 1b, thereby removing the moist from the humid air by condensing the moist in the humid air. Thus, the dry air removing the moist is re-flown into the drum.

However, the related art condenser 1 performing the heat-exchange according to the aforementioned method has problems in that the heat-exchange is not smoothly made.

As shown in FIG. 2, an external air outlet A of the cooling fan 2 is narrower than an external air inlet B of the condenser 1, so that the external air flows fast at the center portion of the condenser 1 through which the external air is flown. However, the external air flows slowly according as going to the periphery portions of a longitudinal direction of the condenser 1. In FIG. 2, an arrow II indicates a flow speed of the external air, '3' indicates a driving motor, '4' indicates a duct for guiding the external air blown from the cooling fan 2 to the condenser 1.

Accordingly, the heat-exchange is actively made at the center portion of the longitudinal direction of the condenser 1 where the external air flows fast since the amount of the external air flown into the condenser 1 is large in a unit time period. Meanwhile, the heat-exchange is poorly made at the periphery portions of the longitudinal direction of the condenser 1 where the external air flows slowly since the amount of the external air flown into the condenser 1 is small in the unit time period. That is, it is hard to uniformly make the heat-exchange in the entire portions of the condenser 1 since the flow speed of the external air flown into the condenser 1 changes, thereby decreasing the heat-exchange efficiency of the condenser 1. Furthermore, the drying efficiency of the condensing-type clothes dryer is deteriorated.

Also, the flow speed of the external air passing through the condenser 1 exceedingly changes, so that the air unstably flows, thereby generating noise due to an unstable circulation of the air.

### SUMMARY OF THE INVENTION

Accordingly, the present invention is directed to a condenser of a condensing-type clothes dryer that substantially obviates one or more problems due to limitations and disadvantages of the related art.

An object of the present invention is to provide to a condenser of a condensing-type clothes dryer, which has good heat-exchange efficiency.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a condenser of a condensing-type clothes dryer includes a plurality of condensing ducts provided in a middle portion of a circulation duct, the condensing ducts condensing air being circulated there-through after being discharged from a drum; and a plurality of cooling fins provided to be in contact with an outer surface of the condensing ducts, wherein an interval or a pitch of the cooling fins is different partially according to flow rate of air blown from a cooling fan for a heat-exchange with air flowing through the condensing duct.

In another aspect, a condensing-type clothes dryer includes a drum being rotatably provided in a cabinet; a circulation duct connecting an air inlet and outlet of the drum with each other for forming a circulation passage of an air inside the drum; a condenser having a plurality of circulation ducts being provided in a middle portion of the circulation ducts the condensing ducts condensing air being circulated there-through after being discharged from the drum, and a plurality of cooling fins provided to be in contact with an outer surface of the condensing ducts, wherein an interval or a pitch of the cooling fins is different partially according to air flow rate for a heat-exchange with air flowing through the condensing duct; a cooling fan provided at one side of the condenser for cooling the condenser; and a motor driving the drum and the cooling fan.

Preferably, the pitch or interval of the cooling fins is narrow at a portion where air blown from the cooling fan flows fast, and the pitch or internal of the cooling fins is wide at a portion where air blown from the cooling fan flows slowly.

Preferably, the cooling fin has a longitudinal-section of waveform having pitches, which is provided between the condensing ducts.

Preferably, the cooling fins are provided in a board type for being penetrated by the condensing duct.

Preferably, the intervals or pitches of the cooling fins gradually become wider as going to a portion where air blown from the cooling fan flows slowly.

Preferably, the intervals or pitches of the cooling fins are equally narrow at a portion where air blown from the cooling fan flows fast, and the intervals of the cooling fins are equally wide at a portion where air blown from the cooling fan flows slowly.

Preferably, the intervals or pitches of the cooling fins gradually become narrower as going to the center portion of the longitudinal direction of the condenser where air blown from the cooling fan flows fast, and the pitches of the cooling fins are equally wide at a portion where air blown from the cooling fan flows slowly.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a side view illustrating an arrangement of cooling fins in a related art condenser;

FIG. 2 illustrates a flow speed of an external air passing through a related art condenser;

FIG. 3 is a perspective view illustrating a clothes dryer to which the present invention is applied;

FIG. 4 is a side view illustrating an arrangement of cooling fins in a condenser according to the first embodiment of the present invention;

FIG. 5 illustrates a flow speed of an external air passing through a condenser according to the first embodiment of the present invention;

FIG. 6 is a side view illustrating an arrangement of cooling fins in a condenser according to the second embodiment of the present invention;

FIG. 7 is a side view illustrating an arrangement of cooling fins in a condenser according to the third embodiment of the present invention;

FIG. 8 is a side view illustrating an arrangement of cooling fins in a condenser according to the fourth embodiment of the present invention;

FIG. 9 is a side view illustrating an arrangement of cooling fins in a condenser according to the fifth embodiment of the present invention; and

FIG. 10 is a side view illustrating an arrangement of cooling fins in a condenser according to the sixth embodiment of the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

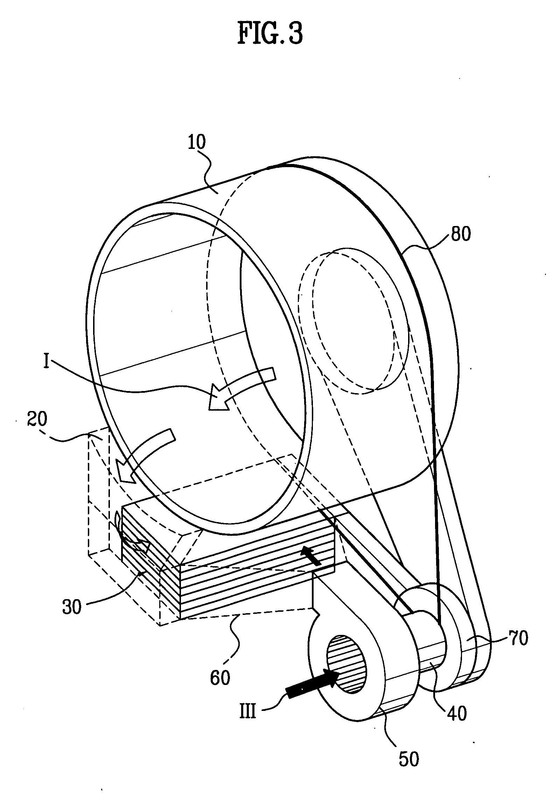

A clothes dryer according to the present invention will be described with reference to the accompanying drawings. FIG. 3 illustrates a structure of the clothes dryer according to the present invention. In FIG. 3, an arrow I indicates a flow of a circulation air, and an arrow III indicates a flow of an external air.

Referring to FIG. 3, the condensing-type clothes dryer according to the present invention is provided with a drum 10, a circulation duct 20, a condenser 30, and a cooling fan 50.

At this time, the cylinder-shaped drum 10 having a plurality of lifters (not shown) on an inner surface thereof is rotatably provided in a cabinet (not shown). The clothes are dried in the drum 10 being rotated by a motor 40. In this respect, the drum 10 is connected to the motor 40 by a belt 80.

The circulation duct 20 is provided for connecting an air inlet of the drum 10 to an air outlet of the drum 10, thereby forming a circulation passage of air inside the drum 10. Thus, an air used for drying the clothes in the drum 10 flows through the circulation duct 20, and then flows into the inside of the drum 10.

The condenser 30 is provided at a middle portion of the circulation duct 20, so that the circulation air passes through the inside of the circulation duct 20. That is, the condenser 30 condenses moist of high humid air generated inside the drum 10 during drying the clothes, thereby removing the moist from the humid air. For this, the cooling fan 50 is provided to be adjacent to the condenser 30, for blowing a cool external air into the condenser 30. A duct 60 is for guiding air blown from the cooling fan 50 to the condenser 30.

Meanwhile, the condenser 30 according to the present invention includes a plurality of condensing ducts 30a, and a plurality of cooling fins 30b, 30c, 30d, 30e, 30f, and 30g. At this time, the plurality of condensing ducts 30a are provided in a middle portion of the circulation duct 20 in which air used for drying the clothes in the'drum 10 after being discharged from the outlet of the drum 10 is circulated. The plurality of cooling fins 30b, 30c, 30d, 30e, 30f and 30g are provided to be in contact with an outer surface of the condensing duct 30a, in which an interval or a pitch of the cooling fins is different partially according to flow rate of air blown from the cooling fan 50 for a heat-exchange with air flowing through the condensing duct 30a. That is, the interval or pitch of the cooling fins is varied with the flow speed of air blown from the cooling fan 50. For example, in case of that the speed of air blown from the cooling fan 50 is high, the interval or the pitch of the cooling fins decreases. Meanwhile, in case of that the speed of air from the cooling fan 50 is low, the interval or the pitch of the cooling fins increases.

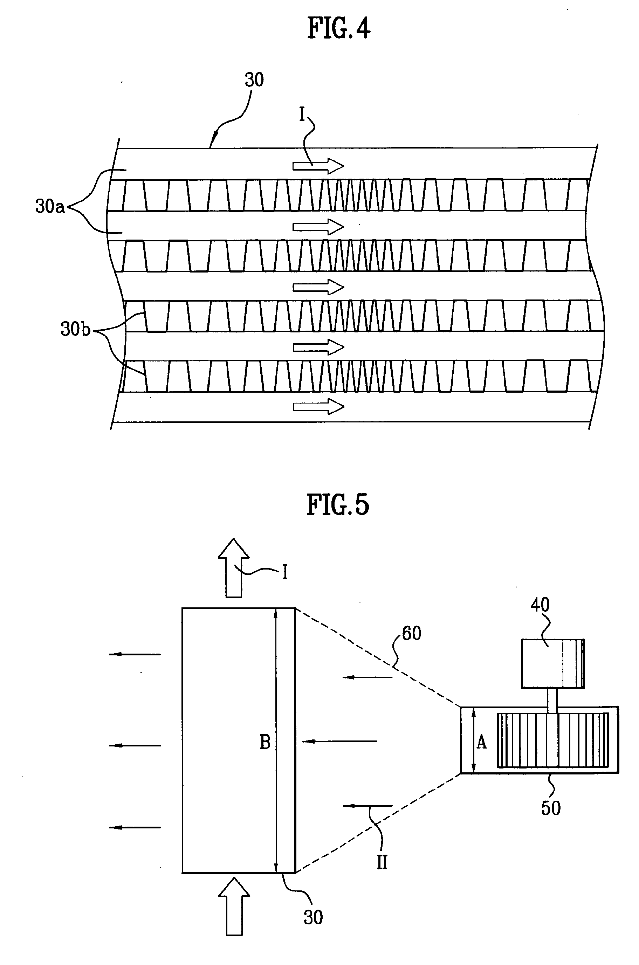

As shown in FIG. 4, FIG. 6 to FIG. 10, the condenser 30 according to the present invention may have various preferred embodiments by making difference in the arrangement of the cooling fins 30b, 30c, 30d, 30e, 30f, and 30g. Hereinafter, the condensers according to the preferred embodiments of the present invention will be explained with reference to the accompanying drawings. At this time, an explanation for the structure of the condensing duct 30a will be omitted since the structure of the condensing duct 30a is same in the respective preferred embodiments.

FIG. 4, FIG. 6 and FIG.7 are side views respectively illustrating the arrangements of cooling fins in condensers according to the first, second and third embodiments of the present invention. In the aforementioned preferred embodiments of the present invention, the cooling fins 30b, 30c and 30d have cross-sectional area of waveforms, which are respectively provided between the condensing ducts 30a.

In the condenser according to the first embodiment of the present invention, pitches of the cooling fins 30b gradually become wider as going to a portion where air blown from the cooling fan 50 flows slowly. For example, as shown in FIG. 4 and FIG. 5, the pitches of the cooling fins 30b are narrow at the center portion of a longitudinal direction of the condenser 30 where air flows fast. Meanwhile, the pitches of the cooling fins 30b become wider as going to periphery portions of the longitudinal direction of the condenser 30 where air blown from the cooling fan 50 flows slowly.

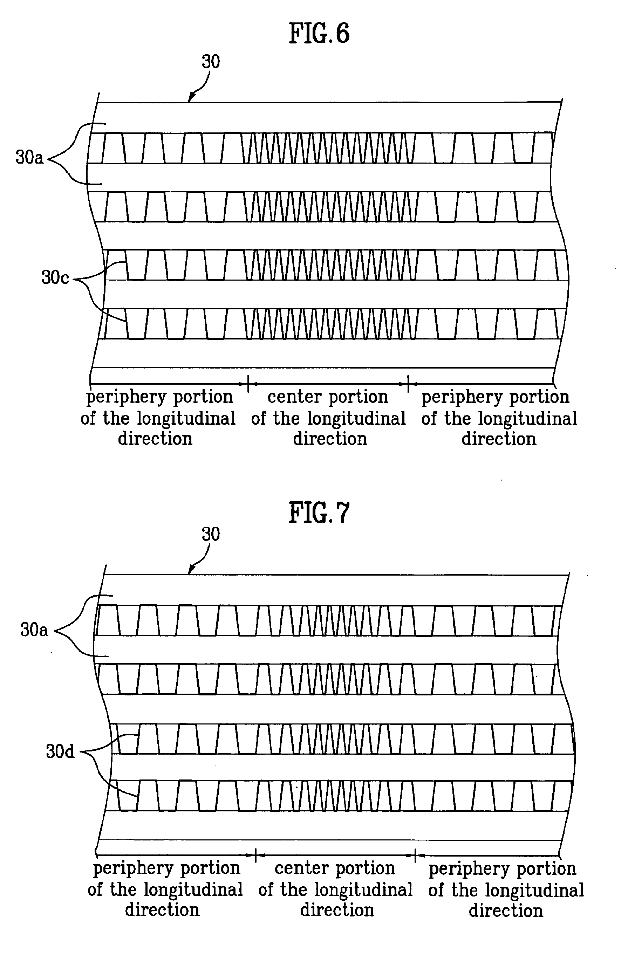

In the condenser according to the second embodiment of the present invention, pitches of the cooling fins 30c are equally narrow at a portion where air blown from the cooling fan 50 flows fast, and the pitches of the cooling fins 30c are equally wide at portions where air blown from the cooling fan 50 flows slowly. For example, as shown in FIG. 6, the pitches of the cooling fins 30c are equally narrow at the center portion of the longitudinal direction of the condenser 30 where air blown from the cooling fan 50 flows fast. Meanwhile, the pitches of the cooling fins 30c are equally wide at the periphery portions of the longitudinal direction of the condenser 30 where air blown from the cooling fan 50 flows slowly.

In the condenser according to the third embodiment of the present invention, pitches of the cooling fins 30d gradually become narrower as going to the center portion of the longitudinal direction of the condenser 30 where air blown from the cooling fan 50 flows fast. The pitches of the cooling fins 30d are equally wide at portions where air blown from the cooling fan 50 flows slowly. For example, as shown in FIG. 7, the pitches of the cooling fins 30d gradually become narrower as going to the center portion of the longitudinal direction of the condenser 30 where air blown from the cooling fan 50 flows fast. The pitches of the cooling fins 30d are equally wide at the periphery portions of the longitudinal direction of the condenser 30 where air blown from the cooling fan 50 flows slowly.

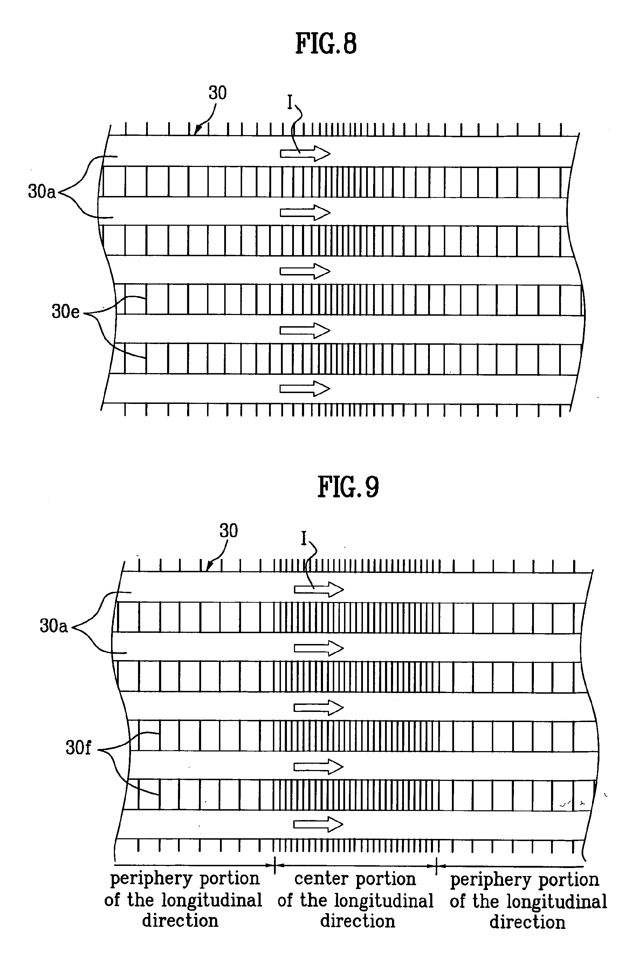

FIG. 8, FIG. 9 and FIG. 10 illustrate condensers according to the fourth, fifth, and sixth embodiments of the present invention. In the condensers according to the fourth to sixth embodiments of the present invention, the cooling fins 30e, 30f, and 30g of the condenser 30 are provided in a board type for being penetrated by the condensing duct 30a.

In the condenser according to the fourth embodiment of the present invention pitches of the cooling fins 30e gradually become wider as going to a portion where air blown from the cooling fan 50 flows slowly. For example, as shown in FIG. 8, the pitches of the cooling fins 30e are narrow at the center portion of the longitudinal direction of the condenser 30 where air blown from the cooling fan 50 flows fast. Meanwhile, the pitches of the cooling fins 30e become wider as going to the periphery portions of the longitudinal direction of the condenser 30 where air blown from the cooling fan 50 flows slowly.

In the condenser according to the fifth embodiment of the present invention, pitches of the cooling fins 30f are equally narrow at a portion where air blown from the cooling fan 50 flows fast, and the pitches of the cooling fins 30f are equally wide at portions where air blown from the cooling fan 50 flows slowly. For example, as shown in FIG. 9, the pitches of the cooling fins 30f are equally narrow at the center portion of the longitudinal direction of the condenser 30 where air blown from the cooling fan 50 flows fast. Meanwhile, the pitches of the cooling fins 30f are equally wide at the periphery portions of the longitudinal direction of the condenser 30 where air blown from the cooling fan 50 flows slowly.

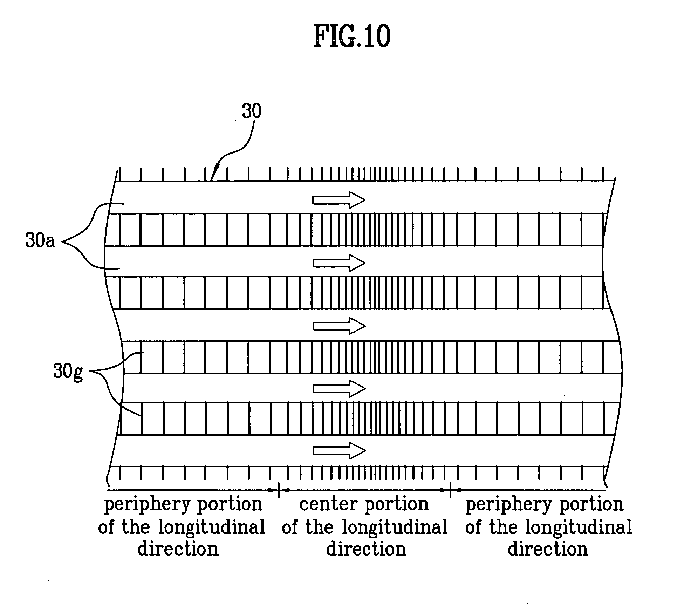

In the condenser according to the sixth embodiment of the present invention, pitches of the cooling fins 30g gradually become narrower as going to the center portion of the longitudinal direction of the condenser 30 where air blown from the cooling fan 50 flows fast. The pitches of the cooling fins 30g are equally wide at portions where air blown from the cooling fan 50 flows slowly. For example, as shown in FIG. 10, the pitches of the cooling fins 30g gradually become narrower as going to the center portion of the longitudinal direction of the condenser 30 where air blown from the cooling fan 50 flows fast. The pitches of the cooling fins 30g are equally wide at the periphery portions of the longitudinal direction of the condenser 30 where air blown from the cooling fan 50 flows slowly.

The heat-exchange of the condensers according to the preferred embodiments of the present invention will be explained as follows.

Air becomes high humid after drying the clothes in the drum. Then, the high humid air is flown into the condensing duct 30a by circulating through the circulation duct 20. The cool air blown from the cooling fan 50 is flown into the portion having the cooling fins 30b, 30c, 30d, 30e, 30f, and 30g between the respective condensing ducts 30a through the duct 60. That is, the high humid air flowing in the condensing duct 30a makes heat-exchange with the cool air through the medium of the outer surface of the condensing duct 30a and the cooling fins 30b, 30c, 30d, 30e, 30f, and 30g, so that the moist of the high humid air is condensed, thereby removing the moist from the high humid air.

An external air outlet A of the cooling fan 50 is narrower than an external air inlet B of the condenser 30. In this state, even though the flow speed of the external air changes, it is possible to improve heat-exchange efficiency by increasing a heat-exchange area since the interval or pitch of the cooling fins 30b, 30c, 30d, 30e, 30f, and 30g is narrow at the portion where the external air flows fast.

Thus, the interval or pitch of the cooling fins 30b, 30c, 30d, 30e, 30f, and 30g is narrow at the portion where the external air flows fast, so that the flow speed of the external air decreases when the external air passes through the portion where the interval or pitch of the cooling fins 30b, 30c, 30d, 30e, 30f, and 30g is narrow. Also, the interval or pitch of the cooling fins 30b, 30c, 30d, 30e, 30f, and 30g is wide at the portion where air blown from the cooling fan 50 flows slowly, so that the flow speed of air does not decrease even though the air passes through the portion where the interval or pitch of the cooling fins 30b, 30c, 30d, 30e, 30f, and 30g is wide. Referring to FIG. 5, the flow speed of air blown from the cooling fan 50 is hardly changed after passing through the condenser 30, thereby decreasing circulation noise by a smooth circulation.

Meanwhile, the condensing-type clothes dryer according to the present invention includes a circulation fan 70 for smoothly circulating the air in the circulation duct 20. The circulation fan 70 is rotated by the motor 40.

In the condensing-type clothes dryer according to the present invention, a heater (not shown) is provided in the circulation duct 20 for heating the circulation air. Also, a filter (not shown) is provided in the circulation duct 20 for filtering out particles such a nap from the circulation air flowing in the circulation duct 20 after drying the clothes in the drum 10. A gutter (not shown) is provided below the condenser 30 for collecting a condensed water generated during a condensing process step, and a pump (not shown) is provided for forcibly draining the condensed water collected in the gutter, or for circulating the condensed water to a condensed water tank (not shown) in the cabinet (not shown) having the drum 10.

The clothes dryer having the condenser according to the present invention is operated as follows.

First, the drum 10 is rotated with the rotation of the motor 40, so that the clothes are mixed in the drum 10. In this state, the circulation fan 70 is operated to circulate the air inside the drum 10, and the heater heats the circulation air. The heated circulation air becomes high humid during drying the clothes being mixed in the drum 10, and the high humid air is circulated through the circulation duct 20. At this time, the high humid air is flown into the condensing duct 30a of the condenser 30, thereby making the heat-exchange with the cool air blown from the cooling fan 50. That is, the moist is removed from the high humid air through the condensing process step. After that, the dry air is heated in the heater, and then the heated air is flown into the inside of the drum 10 so as to dry the clothes. In this state, particles such as the nap of the circulation air are filtered through the filter. The condensed water being collected in the gutter is drained to the outside, or is stored in the condensed water tank by the pump.

Accordingly, the clothes dryer having the condenser according to the present invention has the following advantages.

First, the condenser according to the present invention has good heat-exchange efficiency. Thus, it is possible to perfectly remove the moist from the humid circulation air, thereby improving drying efficiency.

Also, the flow speed of the external air passing through the condenser after being blown from the cooling fan is hardly changed, thereby decreasing circulation noise by the smooth circulation.

It will be apparent to those skilled in the art that various modifications and variations can be made in the present invention. Thus, it is intended that the present invention covers the modifications and variations of this invention provided they come within the scope of the appended claims and their equivalents.

Summarized, a condenser of a condensing-type clothes dryer is disclosed, which includes a plurality of condensing ducts provided in a middle portion of a circulation duct, the condensing ducts condensing air being circulated there-through after being discharged from a drum; and a plurality of cooling fins provided to be in contact with an outer surface of the condensing ducts, wherein an interval or a pitch of the cooling fins is different partially according to flow rate of air blown from a cooling fan for a heat-exchange with air flowing through the condensing duct. At this time, the pitch or interval of the cooling fins is narrow at a portion where air blown from the cooling fan flows fast, and the pitch or internal of the cooling fins is wide at a portion where air blown from the cooling fan flows slowly.

## Claims

1. A condenser (30) of a condensing-type clothes dryer, comprising:
a plurality of condensing ducts (30a) provided in a middle portion of a circulation duct (20), the condensing ducts (30a) condensing air being circulated there-through after being discharged from a drum (10); and
a plurality of cooling fins (30b; 30c; 30d; 30e; 30f; 30g) provided to be in contact with an outer surface of the condensing ducts, wherein an interval or a pitch of the cooling fins (30b; 30c; 30d; 30e; 30f; 30g) is different partially according to flow rate of air blown from a cooling fan (50) for a heat-exchange with air flowing through the condensing duct (30a).

2. The condenser (30) as claimed in claim 1, wherein the pitch or interval of the cooling fins (30b; 30c; 30d; 30e; 30f; 30g) is narrow at a portion where air blown from the cooling fan flows fast, and the pitch or interval of the cooling fins (30b; 30c; 30d; 30e; 30f; 30g) is wide at a portion where air blown from the cooling fan (50) flows slowly.

3. The condenser (30) as claimed in claim 1 or 2, wherein the cooling fin has a longitudinal-section of waveform, which is provided between the condensing ducts (30a).

4. The condenser as claimed in claim 1 or 2, wherein the cooling fins (30b; 30c; 30d; 30e; 30f; 30g) are provided in a board type for being penetrated by the condensing duct (30a).

5. The condenser (30) as claimed in one of claims 1 to 4, wherein the pitches or intervals of the cooling fins (30b; 30c; 30d; 30e; 30f; 30g) gradually become wider as going to a portion where air blown from the cooling fan (50) flows slowly.

6. The condenser (30) as claimed in one of claims 1 to 4, wherein the pitches or intervals of the cooling fins (30b; 30c; 30d; 30e; 30f; 30g) are equally narrow at a portion where air blown from the cooling fan (50) flows fast, and the pitches or intervals of the cooling fins (30b; 30c; 30d; 30e; 30f; 30g) are equally wide at a portion where air blown from the cooling fan (50) flows slowly.

7. The condenser (30) as claimed in one of claims 1 to 4, wherein the pitches or intervals of the cooling fins (30b; 30c; 30d; 30e; 30f; 30g) gradually become narrower as going to the center portion of a longitudinal direction of the condenser (30) where air blown from the cooling fan (50) flows fast, and the pitches or intervals of the cooling fins (30b; 30c; 30d; 30e; 30f; 30g) are equally wide at portions where air flows slowly.

8. A condensing-type clothes dryer comprising:
a drum (10) being rotatably provided in a cabinet;
a circulation duct (20) connecting an air inlet and outlet of the drum (10) with each other for forming a circulation passage of air inside the drum (10);
a condenser (30) having a plurality of circulation ducts (30a) being provided in a middle portion of the circulation duct (30) for condensing air being flowing there-through after being discharged from the outlet of the drum (10), and a plurality of cooling fins (30b; 30c; 30d; 30e; 30f; 30g) provided to be in contact with an outer surface of the condensing ducts (30a), wherein an interval or a pitch of the cooling fins (30b; 30c; 30d; 30e; 30f; 30g) is different partially according to air flow rate for a heat-exchange with air flowing through the condensing duct (30a);
a cooling fan (50) provided at one side of the condenser (30) for cooling the condenser (30); and
a motor (40) driving the drum (10) and the cooling fan (50).

9. The condensing-type clothes dryer as claimed in claim 8, comprising the condenser (30) as claimed in one of claims 1 to 7.
